# DEMANDE DE BREVET EUROPEEN

(11) **EP 1 113 684 A1**
(43) Date de publication de la demande: **04.07.2001**
(21) Numéro de dépôt: 00204659.7
(22) Date de dépôt: 20.12.2000
(51) Int. Cl.: H04Q 7/32

(54) **Système, dispositif et procédé pour se connecter avec deux systèmes de transmission TDMA en même temps**

(30) Priorité: 29.12.1999 FR 9916680
(71) Demandeur: Koninklijke Philips Electronics N.V., 5621 BA Eindhoven (NL)
(72) Inventeur: Rek, Leo, Société Civile S.P.I.D., 75008 Paris (FR)
(74) Mandataire: Chaffraix, Jean

(57) **Abrégé**

Ce système de transmission d'informations est formé d'un premier ensemble de transmission (1) et d'un autre ensemble de transmission (2). Un dispositif de télécommunications (5) est prévu pour avoir des accès à ces deux ensembles (1) et (2) du type à répartition temporelle pour fournir des impulsions d'informations en des temps différents l'un de l'autre. Ainsi on obtient un double trafic, simultanément.

Application: liaison d'un téléphone DECT avec ordinateur.

## Description

L'invention concerne un système de transmission d'informations formé d'un premier ensemble de transmission, d'au moins un autre ensemble de transmission et d'un dispositif de télécommunications comportant des moyens d'accès auxdits ensembles de transmission.

L'invention concerne également un dispositif de télécommunications convenant à un tel système et un procédé de transmission mis en oeuvre dans un tel système.

L'invention trouve son application dans le domaine des transmissions.

De tels systèmes sont connus. On pourra à ce sujet consulter le document de brevet du Royaume-Uni portant la référence GB 2 316 581.

Ce document décrit un système dans lequel le dispositif de télécommunications peut rentrer simultanément en communications avec les systèmes, ceci représente une perte de temps lorsque des informations doivent être échangées avec les deux ensembles.

La présente invention propose un dispositif du genre mentionné dans le préambule qui permet de se connecter avec deux systèmes au moins, en même temps et de gagner du temps pour l'échange d'informations entre les deux ensembles.

Pour cela, un tel dispositif est remarquable en ce que les deux ensembles sont du type à répartition temporelle pour fournir des impulsions d'informations en des temps différents l'un de l'autre.

L'idée de l'invention repose sur le fait que certains systèmes fonctionnant selon des critères propres aux système de type TDMA présentent des cycles durant lesquels les périodes de transmission sont courtes par rapport aux périodes de repos bien plus longues, de sorte qu'il est possible de transmettre des informations pour au moins un autre système durant ces périodes de repos.

La description suivante, en regard des dessins ci-annexés, le tout donné à titre d'exemple non limitatif, fera bien comprendre comment l'invention peut être réalisée. Sur les dessins:
La FIG.1 représente un dispositif conforme à l'invention.
La FIG.2 représente un organigramme de fonctionnement de l'appareil conforme à l'invention.
La FIG.3 est un organigramme explicitant le fonctionnement du dispositif de transmission conforme à l'invention.
La FIG.4 est un diagramme temps explicitant le fonctionnement de l'invention dans le cas où le premier ensemble satisfait les normes DECT et le deuxième ensemble répond aux spécifications DECT.

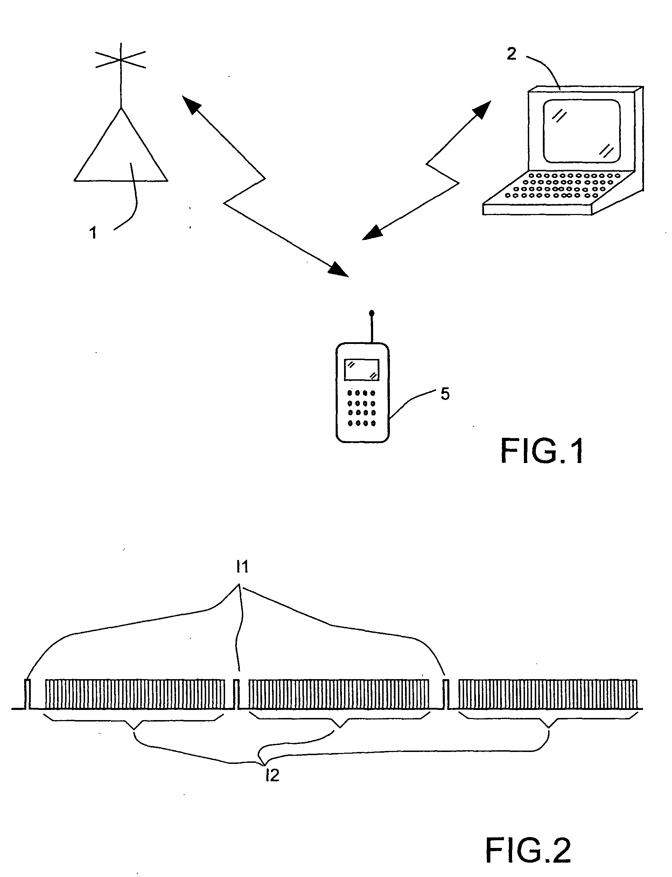

La figure 1 représente un système conforme à l'invention. Dans le cadre de l'exemple décrit, le premier ensemble est un système DECT (ou GSM) dont une partie est représentée sur la figure par un pylône ou une station de base portant la référence 1 alors qu'un autre ensemble est un système répondant aux normes dites " blue tooth " comportant une partie située sur un terminal informatique 2. Le dispositif de télécommunications porte la référence 5 et comporte les autres parties desdits deux ensembles.

Selon l'invention la transmission de l'information entre le dispositif 5 et le pylône ou la station de base 1 s'effectue au moyen des impulsions I1 dont l'allure et la répartition temporelle sont montrées à la figure 2. Entre ces impulsions I1, on émet ou on reçoit des paquets d'impulsions I2 pour l'échange d'informations entre le dispositif de télécommunications 5 et le terminal 2.

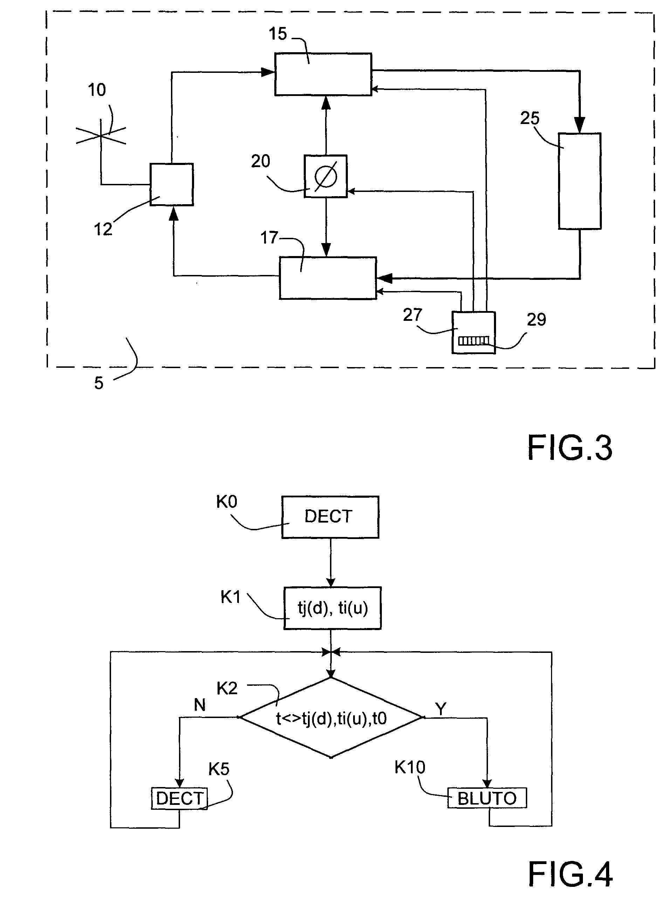

La figure 3 montre un schéma du dispositif de transmission 5 selon l'invention. Il se compose d'une antenne 10 qui est utilisée tant en émission qu'en réception par le truchement d'un duplexeur 12. Cette antenne reçoit des signaux pour les transmettre à une partie réception 15 et émet d'autres signaux provenant d'une partie émission 17. Les fréquences porteuses des signaux émis et des signaux reçus sont fixées au moyen d'un oscillateur local 20. Un circuit d'utilisation 25 reçoit d'une part les données reçues de la partie réception et fournit d'autre part des données pour la partie émission. Un circuit de gestion 27 à base de processeur permet de gérer la transmission simultanée selon les deux systèmes de transmission de cet exemple décrit. Le fonctionnement de ce circuit 27 nécessite la présence d'un compteur de temps 29. Ce fonctionnement est explicité à l'aide de la figure 4.

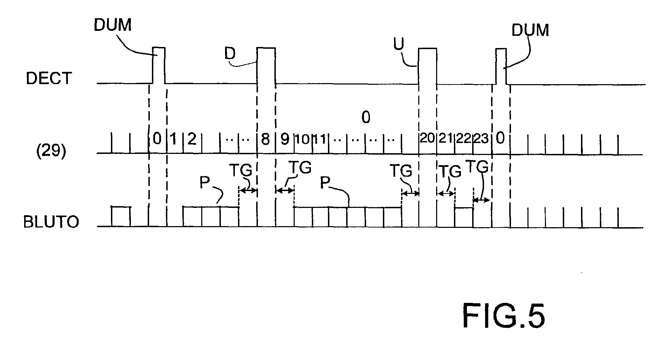

On se place dans le cas où le premier système répond aux normes DECT et le deuxième, aux spécifications du système déjà cité, connu sous le nom de " Blue Tooth ". Le dispositif 5 se connecte tout d'abord sur le système réseau DECT ce qui est explicité par la case K0 de la figure 4. Ceci détermine ( case K1) les temps ti(u) et tj(d) affectés respectivement aux temps dévolus au trafic montant et descendant entre le dispositif 5 et la station de base DECT référencée par 1 sur la figure 1. Le compteur 29 est synchronisé à " 0 " sur les impulsions de synchronisation référencées par DUM à la figure 5. La trame DECT est divisée en 24 parties par le compteur 29 dont le contenu " t " varie à cet effet de 0 à 23. Le temps tj(u) correspond, sur la figure, à un contenu égal à 20 et le temps ti(d) à 8. Le contenu " t " du compteur 29 est testé, ce qui est indiqué à la case K2. Les temps ti(u) et tj(d) ainsi que les temps t0 correspondant aux temps de synchronisation de la trame DECT sont donc affectés à la transmission DECT, ceci est indiqué à la case K5. Si on est en dehors de ces temps alors l'émission en paquets selon les spécifications " Blue Tooth " est permise, case K10.

La figure 5 montre à la ligne BLUTO l'émission en paquets P, en dehors des impulsions d'informations DUM, U, D affectées au système DECT. On notera qu'il y a lieu de prévoir des temps de garde TG entre l'émission DECT et l'émission des paquets P du système " Blue Tooth".

Ainsi, par l'invention, il est possible de transférer des données sur un ordinateur équipé du système " Blue Tooth ". Ces données peuvent provenir par exemple d'un serveur internet accédé au moyen du réseau téléphonique auquel est relié le système DECT.

Il faut bien remarquer que l'exemple décrit montre un mode de réalisation particulièrement avantageux du dispositif de transmission 5. En effet, les parties émission 17 et réception 15 sont communes aux deux systèmes. Il n'y a donc pas lieu de prévoir trop de matériels supplémentaires.

## Revendications

1. Système de transmission d'informations formé d'un premier ensemble de transmission, d'au moins un autre ensemble de transmission et d'un dispositif de télécommunications comportant des moyens d'accès auxdits ensembles de transmission, caractérisé en ce que les deux ensembles sont du type à répartition temporelle pour fournir des impulsions d'informations en des temps différents l'un de l'autre.

2. Système selon la revendication 1, caractérisé en ce qu'un desdits systèmes répond à la norme DECT et l'autre aux spécifications connues sous le nom de " Blue Tooth ".

3. Dispositif de transmission, caractérisé en ce qu'il comporte des moyens pour se connecter sur au moins deux ensembles de transmission simultanément.

4. Dispositif selon la revendication 3, caractérisé en ce que les moyens se connectent en des temps différents sur les deux systèmes au moins.

5. Dispositif convenant à un système selon la revendication 4 ou 3, caractérisé en ce qu'il est constitué par un poste mobile du type DECT.

6. Procédé de transmission entre un dispositif et au moins deux ensembles de transmission, caractérisé en ce que lesdits ensembles traitent leurs informations en des temps différents l'un de l'autre, en ce que le dispositif se connecte en ces temps différents aux deux ensembles.
